(19) Europäisches Patentamt
European Patent Office
Office européen des brevets

(11) Veröffentlichungsnummer: **0 262 518**
**A1**

# (12) EUROPÄISCHE PATENTANMELDUNG

(21) Anmeldenummer: **87113603.2**

(22) Anmeldetag: **17.09.87**

(51) Int. Cl.[4]: **C08G 12/32**, C08G 12/42, C08L 61/28

(30) Priorität: **25.09.86 DE 3632588**

(43) Veröffentlichungstag der Anmeldung:
**06.04.88 Patentblatt 88/14**

(84) Benannte Vertragsstaaten:
**AT BE CH DE ES FR GB IT LI NL**

(71) Anmelder: **CASSELLA Aktiengesellschaft**
**Hanauer Landstrasse 526**
**D-6000 Frankfurt am Main 61(DE)**

(72) Erfinder: **Förster, Frank, Dr.**
**Auf der Rosenhöhe 5**
**D-6050 Offenbach(DE)**
Erfinder: **Keller, Karlfried, Dr.**
**Marktstrasse 127**
**D-6000 Frankfurt/Main 60(DE)**
Erfinder: **Wagner, Curt-A.**
**verstorben**
**verstorben(DE)**
Erfinder: **Wolf, Alfons**
**Einhardstrasse 34**
**D-6453 Seligenstadt(DE)**

(74) Vertreter: **Urbach, Hans-Georg, Dr. et al**
**Hanauer Landstrasse 526**
**D-6000 Frankfurt am Main 61(DE)**

## (54) Verfahren zur Herstellung von Melamin-Formaldehyd-Harzen.

(57) Bei dem Verfahren zur Herstellung von Melamin-Formaldehyd-Harzen wird Melamin mit Paraformaldehyd und mit einem Glykolether und/oder Alkylglykolether und gegebenenfalls weiteren Hydroxylverbindungen bei Temperaturen zwischen 70°C und dem Siedepunkt des Reaktionsgemisches bei pH-Werten zwischen 7 und 11 umgesetzt.

EP 0 262 518 A1

Xerox Copy Centre

# Verfahren zur Herstellung von Melamin-Formaldehyd-Harzen

Die vorliegende Erfindung betrifft ein neues Verfahren zur Herstellung teilveretherter Melamin-Formaldehyd-(MF)-Harze mit hoher Elastizität, wobei die Veretherung im schwach alkalischen Bereich bei Temperaturen unterhalb des Siedepunkts des Reaktionsgemischs ohne Destillation durchgeführt wird und als Veretherungsalkohole mindestens ein Glykolether oder Alkylglykolether und gegebenenfalls eine oder mehrere andere ein-bzw. mehrfunktionelle Hydroxylverbindungen eingesetzt werden. Die Erfindung betrifft auch die Melamin-Formaldehyd-Harze und ihre Verwendung als Tränkharze sowie zur Herstellung von Preßmassen und Formteilen.

Es ist seit langem bekannt, Methylolmelamine bei Temperaturen unter 100°C in Gegenwart saurer oder stark alkalischer Katalysatoren mit niederen Alkoholen zu verethern und diese veretherten Melamine mit längerkettigen Alkoholen bzw. Glykolen, Glykolethern oder Alkylglykolethern in einem zweiten Arbeitsschritt, ebenfalls in Gegenwart sauerer bzw. stark alkalischer Katalysatoren, unter Abspaltung der niederen Alkohole zu den entsprechenden Ethern der höheren Alkohole umzusetzen. Der jeweilige Katalysator muß bei diesem Verfahren nach beendeter Reaktion neutralisiert und aus dem Produkt entfernt werden, was oft nur unvollständig gelingt und zur Beeinträchtigung vor allem der Haltbarkeit der Harze führt.

Es ist auch bekannt, Methylolmelamine im alkalischen Bereich direkt mit Glykol, Glykolethern oder Alkylglykolethern zu verethern. In den deutschen Offenlegungsschriften 19 32 523 und 26 03 768 wurden Verfahren vorgestellt, nach denen die entsprechenden Veretherungsalkohole im Überschuß eingesetzt und - ebenso wie das entstehende Reaktionswasser - bei Temperaturen oberhalb 120°C, gegebenenfalls im Vakuum, abdestilliert werden.

Gemäß der DE-OS 28 24 473 können mit Alkylglykolethern veretherte MF-Harze mit niedrigem Formaldehydgehalt (Molverhältnis M : F = 1 : 1,25 bis 1) durch direkte Umsetzung der Komponenten hergestellt werden. Aus den Beispielen geht jedoch hervor, daß das mit der wäßrigen Formaldehydlösung eingebrachte Wasser sowie das entstehende Reaktionswasser bei reduziertem Druck abdestilliert werden muß, um im Produkt Feststoffgehalte zu erreichen, die oberhalb ca. 60 Gew.% liegen.

Die in der EP-PS 52 211 genannten, mit mehrwertigen Alkoholen veretherten MF-Harze mit niedrigem Formaldehydgehalt (M : F = 1 : 1,25 bis 1) werden bei der Siedetemperatur der Reaktionsmischung hergestellt, d.h. zwischen 100 und 130°C. Die kürzeste angegebene Reaktionszeit in diesem Temperaturbereich liegt bei 85 min (Beispiel 1). Diese MF-Harze dienen lediglich als Modifizierungsmittel für andere Aminoplastharze; eine direkte Verwendung dieser MF-Harze ohne Abmischung mit anderen Aminoplastharzen ist nicht beschrieben.

Es ist ebenfalls bekannt, daß durch Tränken mit MF-Harzen beschichtete Papier-bzw. Gewebebahnen nur dann die für verschiedene Verwendungszwecke benötigte Elastizität besitzen, wenn dem MF-Harz geeignete Modifizierungsmittel, wie z.B. mehrwertige Alkohole, zugesetzt werden.

Dabei leidet häufig die Wasserfestigkeit der Harze nach dem Aushärten. Zudem ist auch die Elastizität der durch Verpressen von mit derart modifizierten Aminoplastharzen imprägnierten Furnieren bzw. Papier-oder Gewebebahnen hergestellten Schichtpreßstoffen vor allem bei längerer thermischer Belastung nicht immer ausreichend.

Es wurde nun gefunden, daß elastische und wasserfest aushärtende MF-Harze auch bei Kondensationstemperaturen unterhalb des Siedepunkts des Reaktionsgemischs hergestellt werden können, wenn ein pH-Wert oberhalb 7 eingestellt und in Gegenwart von Glykolethern oder Alkylglykolethern gearbeitet wird. Dabei ist es nicht erforderlich, einen Überschuß an Veretherungsalkoholen einzusetzen bzw. das entstehende Reaktionswasser abzudestillieren.

Das erfindungsgemäße Verfahren betrifft die Herstellung von teilveretherten Melamin-Formaldehyd-Harzen, wobei Melamin mit

(1) 2 bis 7 mol pro mol Melamin an Formaldehyd, der als Paraformaldehyd mit bis zu 10 Gew.% Wasser vorliegt,

(2) 1 bis 5 mol pro mol Melamin eines Glykolethers oder Alkylglykolethers der allgemeinen Formel I

$$R^1-(-OCH_2CH_2-)_m-OH \quad (I)$$

worin $R^1$ Wasserstoff oder eine Alkylgruppe mit 1 bis 4 C-Atomen und m eine ganze Zahl von 1 bis 4 bedeutet, aber nicht gleichzeitig $R^1$ = Wasserstoff und m = 1 sein dürfen.

(3) 0 bis 1 mol pro mol Melamin einer von (II) verschiedenen, Hydroxylgruppen enthaltenden Verbindung der allgemeinen Formel (II)

$$R^2-(-OCH_2CH_2-)_n-R^3 \quad (II)$$

worin $R^2$ Wasserstoff oder eine Alkylgruppe mit 1

bis 4 C-Atomen, $R^3$ eine der Gruppen $-OH$, $-CH_2OH$ oder $-CH_2CH_2OH$ und n eine ganze Zahl von 1 bis 4 bedeutet,

(4) 0 bis 0,5 mol pro mol Melamin eines Alkohols der allgemeinen Formel III in monomerer oder oligomerer Form

$$HOCH_2-(-CHOH-)_p-CH_2OH \quad (III)$$

worin p eine ganze Zahl von 1 bis 4 bedeutet,

(5) 0 bis 1 mol pro mol Melamin eines monofunktionellen Alkohols mit 1 bis 4 C-Atomen,

(6) 0 bis 1 mol pro mol Melamin eines nichtreduzierenden Zuckers und

(7) 0 bis 2 mol pro mol Melamin an Wasser - zusätzlich zu dem gemäß (1) im Paraformaldehyd vorhandenen Wasser bei Temperaturen zwischen 70°C und dem Siedepunkt des Reaktionsgemisches bei pH-Werten zwischen 7 und 11 umgesetzt wird.

Vorzugsweise werden bei der Umsetzung pro mol Melamin 2,5 bis 6 mol Formaldehyd eingesetzt. Der pH-Wert wird vorzugsweise mit einem tertiären Amin, z.B. einem Dialkylalkanolamin, vorzugsweise auf pH 7,5 bis 10, ganz besonders bevorzugt auf pH 8,5 bis 9,8, eingestellt. Die Kondensationstemperatur liegt zwischen 70°C und der Siedetemperatur des Gemisches, vorzugsweise beträgt sie 80 bis 95°C und kann während der Reaktion innerhalb dieser Grenzen variiert werden.

Glykolether der allgemeinen Formel I sind beispielsweise Di-, Tri-oder Tetraglykol, d.h. also Di-, Tri-oder Tetraethylenglykol. Alkylglykolether der allgemeinen Formel I sind z.B. die Methyl-, Ethyl-und Butylether des Glykols, Diglykols, Triglykols und Tetraglykols. Hydroxylgruppen enthaltende Verbindungen der allgemeinen Formel II sind z.B. Glykol, Propandiol-(1,3) und Butandiol-(1,4). Verbindungen der allgemeinen Formel III sind z.B. Glyzerin und Sorbit. Als nichtreduzierender Zucker wird im allgemeinen Saccharose (=Rohrzucker, Rübenzucker) werwendet. Bei der Kondensationsreaktion können von den Verbindungen der allgemeinen Formeln I, II und III jeweils auch Gemische aus zwei oder mehr Verbindungen eingesetzt werden. Ebenso können auch Gemische mehrerer nichtreduzierender Zucker eingesetzt werden.

Der Glykolether oder Alkylglykolether der allgemeinen Formel I wird vorzugsweise zu 1,25 bis 3 mol pro mol Melamin eingesetzt. In der allgemeinen Formel I bedeutet $R^1$ vorzugsweise Wasserstoff, Methyl oder Ethyl, und m bedeutet vorzugsweise 2 oder 3.

In der allgemeinen Formel II bedeutet $R^2$ vorzugsweise Wasserstoff, Ethyl oder n-Butyl, und n bedeutet vorzugsweise 2 oder 3. Als Alkohol der allgemeinen Formel III wird vorzugsweise eine Verbindung eingesetzt, in der p für die Zahl 1 oder 4 steht.

Es ist nicht davon auszugehen, daß die im Reaktionsgemisch eingesetzten hydroxylgruppenhaltigen Verbindungen vollständig verethert werden. Vielmehr ist zu erwarten, daß von ihnen ein nicht genau bestimmbarer Anteil als Lösungsmittel für das teilveretherte Melamin-Formaldehyd-Harz dient. Da Glykol, Glykolether und Alkylglykolether gute Lösungsmittel für Melamin-Formaldehyd-Harze sind, kann die Reaktion bis zu hohen Kondensationsgraden, gemessen durch die Wasserverdünnbarkeit, getrieben werden. So können z.B. gut haltbare Harze mit einer Wasserverdünnbarkeit (bei 23°C) von 1 : 1,6 hergestellt werden. Andererseits sind ebenfalls gut haltbare Harze herstellbar, bei denen die Kondensation bereits bei einer unbegrenzten Wasserverdünnbarkeit abgebrochen wird.

Die nach dem erfindungsgemäßen Verfahren hergestellten Melamin-Formaldehyd-Harze können für alle Einsatzzwecke verwendet werden, die für Melamin-Formaldehyd-Harze bekannt sind, vorzugsweise jedoch als Tränkharze und zur Herstellung von Preßmassen bzw. Formkörpern.

Tränkharze dienen zur Imprägnierung von Trägermaterialien, z.B. Gewebebahnen aus organischen und anorganischen Fasermaterialien. Die nach dem Imprägnieren und Trocknen erhaltenen, flächenförmigen Gebilde können in mehreren Lagen übereinandergelegt bei erhöhter Temperatur zu flächenförmigen Schichtstoffen verpreßt werden oder als Einschichtfolie nach genügender Aushärtung zur Oberflächenbeschichtung von plattenförmigen Werkstoffen, z.B. Holzspanplatten, Verwendung finden. Dabei werden die mit Aminoplastharzen imprägnierten Trägermaterialien unter Verwendung von Verleimungsmitteln auf die Holzwerkstoffplatten aufgepreßt. Die Eigenschaften der so hergestellten Schichtstoffe oder Folien sind weitgehend abhängig von der Art des verwendeten Aminoplastharzes. Den bisher bekannten Aminoplastharzen haften Nachteile an, die ihre Verwendung teilweise erheblich einschränkt, beispielsweise waren Folien aus Papier oder Gewebebahnen, hergestellt mit bisher bekannten Melamin-Formaldehyd-Harzen, nicht ausreichend elastisch. Die Verformbarkeit der Folien kann wohl durch Zusatz von geeigneten Modifizierungsmitteln zum Tränkharz verbessert werden, oft verschlechtert sich jedoch die Wasserfestigkeit solcher Folien oder Schichtstoffe, so daß solche Folien beispielsweise nicht zum Ummanteln von Profilleisten verwendet werden können.

Die unter Einsatz der erfindungsgemäßen Melamin-Formaldehyd-Harzen hergestellten Schichtstoffe und Folien zeichnen sich durch besondere Elastizität, ausgezeichnetem Überspannverhalten und sehr gute Wasserfestigkeit aus. Sie eignen sich besonders zur Herstellung von Kantenmaterial für den sogenannten Softformingbereich oder für Ummantelungsfolien für Profilleisten.

Die unter Einsatz der erfindungsgemäßen Aminoplastharzen hergestellten Schichtstoffe zeichnen sich neben ausgezeichneter Elastizität durch sehr hohen elektrischen Widerstand und besonders gute Kriechstromfestigkeit aus.

Bekannt ist auch die Möglichkeit, Formkörper herzustellen, indem Aminoplastharze mit pulver- oder faserförmigen Füllmitteln und gegebenenfalls Pigmenten, Gleit-und Trennmitteln kombiniert und die so erhaltenen Preßmassen bei erhöhter Temperatur in Formen zu Formteilen verpreßt werden. Die unter Einsatz der erfindungsgemäßen Melamin-Formaldehyd-Harze hergestellten Formteile zeigen gleich gute elektrische Eigenschaften wie die Schichtstoffe, daneben hohe Formbeständigkeit in der Wärme, hohe Schlagzähigkeit und Biegefestigkeit und geringe Nachschwindung.

Der Feststoffgehalt der gemäß den folgenden Beispielen hergestellten Produkte wird ermittelt, indem eine Probe von 2 g Harzlösung im Aluminiumschälchen 1 h bei 120°C gelagert und der Gewichstverlust bestimmt wird. Die Messung der Wasserverdünnbarkeit erfolgt, sofern nichts anderes angegeben ist, bei 23°C. Die Lagerung wird bei Raumtemperatur durchgeführt. Die Haltbarkeit gilt dann als begrenzt, wenn die vorliegende Harzlösung trüb und/oder geliert ist. In den Beispielen steht MDEG für Methyldiethylenglykol (= $H_3COCH_2CH_2OCH_2CH_2OH$).

Beispiel 1:

200 g Methyldiethylenglykol (1,67 mol), 80 g 70gew.%ige wäßrige Sorbitlösung (0,31 mol), 116 g Paraformaldehyd (F) mit einem Wassergehalt von 10 Gew.% (3,48 mol) und 138 g Melamin (M, 1,10 mol; Molverhältnis M : F = 1 : 3,18) werden bei einem pH-Wert von 9 ± 0,2 (eingestellt mit Dimethylaminoethanol) bei 90°C kondensiert. Nach ca. 40 min ist das Melamin vollständig gelöst, nach weiteren ca. 80 min ist die Wasserverdünnbar keit bei Raumtemperatur begrenzt. Die Kondensation wird durch Abkühlen abgebrochen. Durch Zugabe von 40 ml Wasser wird auf einen Feststoffgehalt von 73 Gew.% eingestellt. Der pH-Wert der klaren, gut fließbaren Harzlösung beträgt 8,3, die Wasserverdünnbarkeit 1 : 8,3, die Haltbarkeit über 6 Monate.

Beispiel 2:

Bei einer Wiederholung des Beispiels 1 wird die Kondensation bereits dann abgebrochen, wenn begrenzte Verdünnbarkeit in Eiswasser erreicht ist (einige Tropfen Harzlösung ergeben Trübung einer Wasser-Eis-Mischung). Man erhält ein unbegrenzt wasserverdünnbares Produkt mit einem pH-Wert von 8,6 und einem Festkörpergehalt von 66 Gew.%, das bisher 10 Wochen haltbar ist.

Beispiel 3:

Bei einer Wiederholung des Beispiels 1 wird ca. 4 1/2 h unter den genannten Bedingungen kondensiert. Man erhält ein Produkt mit niedriger Wasserverdünnbarkeit (1 : 1,6), einem Feststoffgehalt von 63 Gew.%, was durch das bei der Veretherung entstehende Reaktionswasser bedingt ist, und einer Haltbarkeit von bisher 3 Monaten. Der pH-Wert der unverdünnten Harzlösung beträgt 7,6.

Beispiel 4:

Wird die Kondensation eines Ansatzes gemäß Beispiel 1 bei 85°C durchgeführt, so ist eine Reaktionszeit von ca. 4 h erforderlich, um ein Harz mit ähnlichen Analysendaten zu erhalten.

Beispiel 5:

180 g MDEG (1,5 mol) und 36 g Ethyltriethylenglykol (0,2 mol) werden mit Dimethylaminoethanol auf einen pH-Wert von 8,1 eingestellt. Nach Zugabe von 80 g 70gew.%iger wäßriger Sorbitlösung (0,31 mol), 116 g Paraformaldehyd (10 Gew.% $H_2O$, 3,48 mol) und 1,38 g Melamin (1,10 mol; M : F = 1 : 3,18) wird 90 min bei 90°C kondensiert und mit 40 ml Wasser auf einen Feststoffgehalt von 74 Gew.% eingestellt. Das Produkt (pH 8,0) besitzt eine Wasserverdünnbarkeit von 1 : 4 und ist mindestens 6 Wochen haltbar.

Beispiel 6:

145 g MDEG (1,21 mol) und 30 g Glyzerin (0,33 mol) werden mit Dimethylaminoethanol auf pH 9,3 eingestellt und mit 100 g Melamin (0,8 mol) und 85 g Paraformaldehyd (10 Gew.% $H_2O$; 2,55 mol; M : F = 1 : 3,21) versetzt. Nach ca. 2 1/2 stündiger Kondensation bei 90°C ist die Wasserverdünnbarkeit bei 23°C begrenzt. Nach dem Abbruch der Reaktion durch Abkühlen wird mit 30 ml $H_2O$ ein Feststoffgehalt von 69 Gew.% eingestellt. Die Wasserverdünnbarkeit der Harzlösung (pH = 8,5) beträgt 1 : 9, die Haltbarkeit über 6 Monate.

Beispiel 7:

145 g MDEG (1,21 mol) und 39 g n-Butyldiglykol (0,24 mol) werden mit Dimethylaminoethanol auf pH 9,3 eingestellt und mit 100 g Melamin (0,8 mol) und 85 g Paraformaldehyd (10 Gew.% $H_2O$; 2,55 mol; M : F = 1 : 3,21) versetzt. Die Kondensation erfolgt ca. 80 min bei 90°C bis zur begrenzten Wasserverdünnbarkeit (bei 23°C), danach wird mit 30 ml $H_2O$ ein Feststoffgehalt von 65 Gew.% eingestellt. Das Produkt (pH = 8,2) besitzt eine Wasserverdünnbarkeit von 1 : 11, die Haltbarkeit beträgt ca. 4 Wochen.

Beispiel 8:

145 g MDEG (1,21 mol) und 11,5 g Glyzerin (0,125 mol) werden mit Dimethylaminoethanol auf pH 9,1 eingestellt. Nach Zugabe von 100 g Melamin (0.8 mol) und 85 g Paraformaldehyd (10 Gew.% $H_2O$; 2,55 mol; M : F = 1 : 3,21) wird bei 90°C kondensiert, bis das Melamin vollständig gelöst ist (ca. 1 h). Zu der klaren Lösung werden 67 g Triethylenglykol zuugetropft (0,45 mol), danach bis zur begrenzten Wasserverdünnbarkeit bei 90°C weiterkondensiert (ca. 30 min). Die Harzlösung wird mit 30 ml $H_2O$ auf einen Feststoffgehalt von 69 Gew.% eingestellt. Die Wasserverdünnbarkeit liegt bei 1 : 12, der pH-Wert bei 8,1, die Haltbarkeit beträgt ca. 4 Monate.

Beispiel 9:

145 g MDEG (1,21 mol) und 12 g Isobutylalkohol (0,16 mol) werden mit Dimethylaminoethanol auf pH 9;1 eingestellt. In die Lösung werden 100 g Melamin (0,8 mol), 85 g Paraformaldehyd (10 Gew.% $H_2O$; 2,55 mol; M : F = 1 : 3,21) und 12 g Glyzerin (0,13 mol) eingetragen. Nach 90 minütiger Kondensation bei 90°C ist die Wasserverdünnbarkeit begrenzt, es wird mit 30 ml $H_2O$ ein Feststoffgehalt von 73 Gew.% eingestellt. Die Wasserverdünnbarkeit des Produkts (pH = 8,4) beträgt 1 : 6,5, die Haltbarkeit über 6 Monate, wobei nach 3 Monaten leichte Opazität eintritt.

Beispiel 10:

145 g MDEG (1,21 mol), 15 g Glyzerin (0,16 mol) und 25 g Wasser (1,4 mol) werden mit Dimethylaminoethanol auf pH 9,3 eingestellt und mit 100 g Melamin (0,8 mol) und 85 g Paraformaldehyd (10 Gew.% $H_2O$; 2,55 mol; M : F = 1:3,21) versetzt. Die Kondensation erfolgt ca. 90 min bei 90°C bis zur begrenzten Wasserverdünnbarkeit. Das Produkt wird mit 15 ml $H_2O$ auf einen Feststoffgehalt von 68 Gew.% eingestellt. Die Wasserverdünnbarkeit der Harzlösung beträgt 1 : 12, pH 9,0 die Haltbarkeit ca. 6 Wochen.

Beispiel 11:

215 g Ethyltriethylenglykol (1,2 mol) und 24 g Triethylenglykol (0,16 mol) werden mit Dimethylaminoethanol auf pH 9 eingestellt. In diese Lösung werden 100 g Melamin (0,8 mol), 85 g Paraformaldehyd (10 Gew.% $H_2O$; 2,55 mol; M : F = 1 : 3,21) und 15 g Glyzerin (0,16 mol) eingetra gen. Nach ca. 40 min Kondensation bei 90°C ist die Verdünnbarkeit mit Eiswasser begrenzt. Mit 30 ml $H_2O$ wird auf einen Feststoffgehalt von 71 Gew.% eingestellt. Das Produkt (pH = 8,2) ist unbegrenzt wasserverdünnbar und über 10 Wochen haltbar, wobei nach 1 Woche leichte Opazität eintritt.

Beispiel 12:

Eine Lösung von 20 g Rübenzucker in 200 g MDEG (1,67 mol) und 10 ml $H_2O$ (0,56 mol) wird bei pH 8,9 (eingestellt mit Dimethylaminoethanol) mit 138 g Melamin (1,1 mol) und 116 g Paraformaldehyd (10 Gew.% $H_2O$; 3,48 mol; M : F = 1 : 3,18) versetzt und bei 90°C bis zur begrenzten Eiswasserverdünnbarkeit kondensiert (ca. 85 min). Nach der Zugabe von 40 ml $H_2O$ ergibt sich ein Feststoffgehalt von 73 Gew.% bei einer unbegrenzten Wasserverdünnbarkeit des Produkts (pH = 8,4). Die Harzlösung wird nach ca. 10 Tagen leicht trüb.

Beispiel 13:

124 g MDEG (1,03 mol), 24 g Triethylenglykol (0,16 mol) und 15 g Glyzerin (0,16 mol) werden bei pH 9,1 (eingestellt mit Dimethylaminoethanol) mit 100 g Melamin (0,8 mol) und 85 G Paraformaldehyd (10 Gew.% $H_2O$; 2,55 mol; M : F = 1 : 3,21) versetzt und bei 90°C bis zur begrenzten Verdünnbarkeit mit Eiswasser kondensiert (ca. 70 min). Mit 30 ml $H_2O$ wird ein Feststoffgehalt von 72

Gew.% eingestellt. Die unbegrenzt wasserverdünnbare Harzlösung (pH 8,1) ist ca. 4 Wochen haltbar, wobei nach ca. 3 Wochen leichte Opazität auftritt.

Beispiel 14:

145 g MDEG (1,21 mol), 20 g 1,3-Propylenglykol (0,26 mol) und 16 g Diethylenglykol (0,15 mol) werden mit Dimethylaminoethanol auf pH 9,1 eingestellt und mit 100 g Mela min (0,8 mol) und 85 g Paraformaldehyd (10 Gew.% $H_2O$; 2,55 mol; M : F = 1 : 3,21) versetzt. Die Kondensation wird bei 95°C bis zur begrenzten Eiswasserverdünnbarkeit durchgeführt (ca.45 min). Nach Zugabe von 30 ml $H_2O$ besitzt die unbegrenzt wasserverdünnbare Harzlösung einen pH-Wert von 8,5 und einen Feststoffgehalt von 66 Gew.%. Das Produkt wird nach ca. 1 Woche leicht trüb.

Beispiel 15:

120 g MDEG (1,0 mol), 48 g 70gew.%ige wäßrige Sorbitlösung (0,185 mol) und 12 g Glyzerin (0,13 mol) werden mit Dimethylaminoethanol auf pH 9,3 eingestellt und mit 70 g Paraformaldehyd (10 Gew.% $H_2O$; 2,1 mol) und 83 g Melamin (0,66 mol; M : F = 3,18 mol) versetzt. Nach einer Kondensationszeit von ca. 70 min bei 90°C ist die Verdünnbarkeit mit Eiswasser begrenzt. Nach Zugabe von 25 ml $H_2O$ besitzt die unbegrenzt wasserverdünnbare Harzlösung einen Feststoffgehalt von 71 Gew.%, einen pH-Wert von 8,3 und eine Haltbarkeit von über 10 Wochen.

Beispiel 16:

Eine Suspension von 160 g Melamin (1,27 mol) und 180 g Paraformaldehyd (10 Gew.% $H_2O$; 5,4 mol; M : F = 1 : 4,25) in 330 g MDEG (2,75 mol) wird bei pH 8,1 auf 90°C aufgeheizt. Nachdem das Melamin gelöst ist (nach ca. 45 min), wird bis zum Siedepunkt erhitzt und sofort langsam abgekühlt. Die klare Lösung wird mit 60 ml $H_2O$ versetzt. Der pH-Wert der Lösung liegt bei 8,2, der Feststoffgehalt 53 Gew.%. Die Haltbarkeit beträgt ca. 3 Wochen, die Wasserverdünnbarkeit ist unbegrenzt.

Beispiel 17:

160 g MDEG (1,33 mol) und 20 g Triethylenglykol (0,13 mol) werden mit Dimethylaminoethanol auf pH 9,2 eingestellt und mit 126 g Melamin (1 mol) und 90 g Paraform aldehyd (10 Gew.% $H_2O$; 2,7 mol; M : F = 1 : 2,7) versetzt.
Die Kondensation bei 90°C wird bei begrenzter Eiswasserverdünnbarkeit (nach ca. 45 min) abgebrochen. Mit 35 ml $H_2O$ wird ein Feststoffgehalt von 72,5 Gew.% eingestellt. Die Harzlösung (pH 7,9) ist im Verhältnis 1 : 6 mit Wasser verdünnbar und über 4 Wochen haltbar.

Beispiel 18:

Eine Lösung aus 290 g MDEG (2,42 mol), 24 g Triethylenglykol (0,16 mol) und 15 g Glyzerin (0,16 mol) wird mit Dimethylaminoethanol auf pH 9,0 eingestellt und mit 100 g Melamin (0,79 mol) und 165 g Paraformaldehyd (10 Gew.% $H_2O$; 6,1 mol; M : F = 1 : 6,24) versetzt. Nach einer Kondensationszeit von 5 h wurde mit 30 ml Wasser auf einen Feststoffgehalt von 57 Gew.% eingestellt. Das Produkt (pH 7,5) ist unbegrenzt mit Wasser verdünnbar und über 10 Wochen haltbar.

Beispiel 19:

In 1016 g Triethylenglykol (6,8 mol), das mit Dimethylaminoethanol auf pH 9,1 eingestellt worden war, werden 550 g Melamin (4,4 mol) und 466 g Paraformaldehyd (10 Gew% $H_2O$; 14 mol; M : F = 1 : 3,2) eingetragen. Nach einer Reaktionszeit von 75 min bei 80°C ist die Wasserverdünnbarkeit begrenzt. Mit 500 ml $H_2O$ wird nach dem Abkühlen ein Feststoffgehalt von 71 Gew.% eingestellt. Die Harzlösung besitzt einen pH-Wert von 7,5 und eine Wasserverdünnbarkeit von 1 : 6. Die Haltbarkeit beträgt über 4 Wochen.

Beispiel 20:

In dem gemäß Beispiel 12 hergestellten Melamin-Formaldehyd-Harz werden 10 Bogen eines 70g/m$^2$ schweren, elektrolytfreien Papiers imprägniert und anschließend getrocknet. Der Harzanteil nach der Trocknung beträgt etwa 60 Gew.%, die Restfeuchte (bestimmt durch 5 min langes Trocknen einer Probe bei 160°C) ca. 6 Gew.%. Durch Verpressen der übereinandergelegten Papiere in einer Etagenpresse zwischen hochglanzverchromten Nickelblechen bei einer Temperatur von 140°C, einem Druck von ca. 80 bar in einer Zeit von 20 min

erhält man einen etwa 1,1 mm starken Schichtstoff, an dem folgende elektrische Werte gemessen werden:
Elektischer Oberflächenwiderstand: 1 × $10^9$ Ω (DIN 53482)
Kriechstromfestigkeit (DIN 53480): Stufe KA 3 c.

Beispiel 21:

In einer mit Wasser auf 37 Gew.% Festharz verdünnten Lösung des gemäß Beispiel 2 hergestellten Melamin-Formaldehyd-Harzes wird ein 85 g schweres mit Holzmuster bedrucktes Dekorpapier auf einen Harzanteil von 35 Gew.% imprägniert und auf eine Restfeuchte von ca. 2 Gew.% getrocknet.

Dieses Papier wird mit einem handelsüblichen Polyvinylacetat-Leim kalt auf eine Spanplatte aufgeleimt. Das Papier läßt man entsprechend der Stärke der Platte über diese überstehen und ummantelt sie in einem zweiten Arbeitsgang durch Umbiegen der Folie um die Kante unter Verwendung eines geeigneten Leims. Die Folie ist so elastisch, daß beim Ummanteln keine Bruchstellen entstehen.

Die Imprägnierung verleiht dem Papier eine hohe Dichte, die eine Lackierung mit einwandfreiem Lackstand, sowohl direkt nach dem Imprägnieren, wie auch auf dem Werkstück, ermöglicht.

Beispiel 22:

Mit 70 Gew.-Teilen des gemäß Beispiel 17 hergestellten Harzes, 30 Gew.-Teilen Mikrozellulose, 1 Gew.-Teil Zinkstearat wird durch Schmelzimprägnierung bei ca. 110°C und nachträgliches Granulieren die handelsübliche Form einer Preßmasse vom Typ 152 hergestellt, mit der durch Heißpressen nach DIN 53451 Preßteile erhalten werden, die folgende Eigenschaften besitzen;

| | |
|---|---|
| Biegefestigkeit nach DIN 52362 | 104 N/mm² |
| Schlagzähigkeit nach DIN 53453 | 8,5 kJ/m² |
| Nachschwindung nach DIN 53464 | 0,8 % |
| Kriechstromfestigkeit nach DIN 53480 | Stufe KA 3 c. |

## Ansprüche

1. Verfahren zur Herstellung von Melamin-Formaldehyd-Harzen, dadurch gekennzeichnet, daß Melamin mit

(1) 2 bis 7 mol pro mol Melamin an Formaldehyd, der als Paraformaldehyd mit bis zu 10 Gew.% Wasser vorliegt,

(2) 1 bis 5 mol pro mol Melamin eines Glykolethers oder Alkylglykolethers der allgemeinen Formel I

$$R^1\text{-}(\text{-}OCH_2CH_2\text{-})_m\text{-}OH \quad (I)$$

worin $R^1$ Wasserstoff oder eine Alkylgruppe mit 1 bis 4 C-Atomen und m eine ganze Zahl von 1 bis 4 bedeutet, aber nicht gleichzeitig $R^1$ = Wasserstoff und m = 1 sein dürfen.

(3) 0 bis 1 mol pro mol Melamin einer von (II) verschiedenen, Hydroxylgruppen enthaltenden Verbindung der allgemeinen Formel (II)

$$R^2\text{-}(\text{-}OCH_2CH_2\text{-})_n\text{-}R^3 \quad (II)$$

worin $R^2$ Wasserstoff oder eine Alkylgruppe mit 1 bis 4 C-Atomen, $R^3$ eine der Gruppen $-OH$, $-CH_2OH$ oder $-CH_2CH_2OH$ und n eine ganze Zahl von 1 bis 4 bedeutet,

(4) 0 bis 0,5 mol pro mol Melamin eines Alkohols der allgemeinen Formel III in monomerer oder oligomerer Form

$$HOCH_2\text{-}(\text{-}CHOH\text{-})_p\text{-}CH_2OH \quad (III)$$

worin p eine ganze Zahl von 1 bis 4 bedeutet,

(5) 0 bis 1 mol pro mol Melamin eines monofunktionellen Alkohols mit 1 bis 4 C-Atomen,

(6) 0 bis 1 mol pro mol Melamin eines nichtreduzierenden Zuckers und

(7) 0 bis 2 mol pro mol Melamin an Wasser - zusätzlich zu dem gemäß (1) im Para-Formaldehyd vorhandenen Wasser

bei Temperaturen zwischen 70°C und dem Siedepunkt des Reaktionsgemisches bei pH-Werten zwischen 7 und 11 umgesetzt wird.

2. Verfahren gemäß Anspruch 1, dadurch gekennzeichnet, daß die Umsetzung bei Temperaturen von 80 bis 95°C erfolgt.

3. Verfahren gemäß Anspruch 1 oder 2, dadurch gekennzeichnet, daß die Umsetzung bei pH 7,5 bis 10 erfolgt.

4. Verfahren gemäß Anspruch 1 bis 3, dadurch gekennzeichnet, daß 2,5 bis 6 mol Formaldehyd pro mol Melamin eingesetzt werden.

5. Verfahren gemäß den Ansprüchen 1 bis 4, dadurch gekennzeichnet, daß der Glykolether oder Alkylglykolether der allgemeinen Formel I zu 1,25 bis 3 mol pro mol Melamin eingesetzt wird.

6. Verfahren gemäß den Ansprüchen 1 bis 5, dadurch gekennzeichnet, daß als Glykolether oder Alkylglykolether der allgemeinen Formel I eine Verbindung eingesetzt wird, in der $R^1$ Wasserstoff, Methyl oder Ethyl bedeutet und/oder in der m für die Zahl 2 oder 3 steht.

7. Verfahren gemäß den Ansprüchen 1 bis 6, dadurch gekennzeichnet, daß als Glykolderivat der allgemeinen Formel II eine Verbindung eingesetzt wird, in der $R^2$ Wasserstoff, Ethyl oder n-Butyl ist und/oder in der n für die Zahl 2 oder 3 steht.

8. Verfahren gemäß den Ansprüchen 1 bis 7, dadurch gekennzeichnet, daß als Alkohol der allgemeinen Formel III eine Verbindung eingesetzt wird, in der p für die Zahl 1 oder 4 steht.

9. Melamin-Formaldehyd-Harz herstellbar nach dem Verfahren eines oder mehrerer der Ansprüche 1 bis 8.

10. Verwendung des nach dem Verfahren eines oder mehrerer der Ansprüche 1 bis 8 hergestellten Melamin-Formaldehyd-Harzes oder eines Melamin-Formaldehyd-Harzes gemäß Anspruch 9 als Tränkharz oder zur Herstellung von Preßmassen und Formteilen.

Europäisches Patentamt

# EUROPÄISCHER RECHERCHENBERICHT

Nummer der Anmeldung

EP 87 11 3603

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A- 809 662 (MONSANTO) * Seite 1, Zeilen 58-62; Beispiele; Ansprüche * | 1,2 | C 08 G 12/32<br>C 08 G 12/42<br>C 08 L 61/28 |
| Y | FR-A-2 021 364 (SUEDDEUTSCHE KALKSTICKSTOFF WERKE AG) * Seite 1, Zeilen 5-10; Seite 2, Zeilen 12-16,25-27; Beispiel 1; Ansprüche 1-3,6 * | 1 | |
| Y | EP-A-0 006 148 (CASSELLA) * Beispiele 1,4,6; Ansprüche 1,3,6,9 * | 1 | |
| A | FR-A-2 232 560 (BASF) * Seite 2, Zeilen 8-13,36-39; Anspruch * | 1 | |
| A | US-A-4 093 579 (D.F. DELAPP et al.) * Spalte 1, Zeilen 41-43; Spalte 2, Zeilen 25,26; Spalte 5, Zeilen 18-32; Beispiel 1; Ansprüche 1,3 * | 1 | **RECHERCHIERTE SACHGEBIETE (Int. Cl.4)** |
| A | EP-A-0 077 067 (CASSELLA) * Beispiel 1; Ansprüche * | 1 | C 08 G<br>C 08 L |

Der vorliegende Recherchenbericht wurde für alle Patentansprüche erstellt

| Recherchenort | Abschlußdatum der Recherche | Prufer |
|---|---|---|
| DEN HAAG | 07-01-1988 | VON KUZENKO M.T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)